# EUROPEAN PATENT APPLICATION

(11) **EP 1 717 275 A1**
(43) Date of publication of application: **02.11.2006**
(21) Application number: 06008405.0
(22) Date of filing: 24.04.2006
(51) Int. Cl.: C08L 95/00

(54) **Bituminous binder, process for applying the same and its use for road paving**

(30) Priority: 25.04.2005 ES 200500989
(71) Applicant: REPSOL YPF S.A., 28046 Madrid (ES)
(72) Inventor: Paez Dueñas, Antonio, 28224 Pozuelo de Alarcón - Madrid (ES); Romero Palazon, Eduardo, 28935 Móstoles - Madrid (ES); Moreno Martinez, Emilio, 28018 Madrid (ES)
(74) Representative: Carvajal y Urquijo, Isabel

(57) **Abstract**

The present invention relates to a bituminous binder, the process for applying the same and it use. Bituminous binder formulations formed by asphaltic bitumen, fatty acids and metallic catalysts to accelerate their reaction with oxygen are described. These formulations have an application in both bituminous mixtures with aggregates for road paving and surfacing treatments.

## Description

### Technical Field

The present invention relates to a bituminous binder, the process for applying the same and it use. Bituminous binder formulations are described formed by asphaltic bitumen, fatty acids and metallic catalysts to accelerate their reaction with oxygen. These formulations have an application in both bituminous mixtures with aggregates for road paving and surfacing treatments.

### State of the Art

For installing asphalts and bituminous mixtures, it is necessary to decrease the viscosity of asphalt both if it is used as it is or if it is mixed with aggregates. Installation technologies can be classified as hot technology or cold technology depending on the system used to decrease the viscosity of asphalt.

Hot technology consists of decreasing the bitumen viscosity by increasing its temperature. This causes a discharge of fumes to the atmosphere that would be desirable to avoid. The bituminous mixture can be extended and compacted while it is sufficiently hot. Once it is cold, the asphaltic pavement develops mechanical properties that make it suitable for supporting road traffic.

As for cold technology, there are two variations:

In one of them, the asphaltic bitumen is mixed with volatile solvents, fluidizing agents to soften it and to make it capable of mixing with aggregates or extending easily on the road. The bituminous mixture manufactured with this binder can be extended and compacted while there are sufficient amounts of solvent. Once the solvent has evaporated, the asphaltic pavement manufactured with this binder develops mechanical properties that make it capable of supporting road traffic. The drawback to this variant is that large amounts of hydrocarbons are discharged to the atmosphere.

Bituminous emulsions are used in the second variant. In contrast to its advantage of working at room temperature, there is the drawback that the pavements manufactured with bituminous emulsions are not suitable for intense traffic. Furthermore, most emulsions are formulated with variable amounts of volatile solvents that must evaporate before reaching their service properties.

Lately, there is a great interest in finding new ways of providing the road paving industry with bituminous binders that can be extended at lower temperatures, that can lead to mechanical properties in pavements which allow supporting greater road traffic and that do not have to use volatile solvents.

One of them consists of adding a product compatible with bitumen that hardens in the presence of oxygen.

In the varnish and paint industry, the ability of fatty acids to react with oxygen and their ability for cross link polymerization until the formation of a solid film are known. However, the speed of polymerization is very slow so metallic catalysts in the form of salts (see for example Lambourne, R "Paint and Surface Coatings"; Ellis Horwood Limited, 1987) are required. This property is used by the varnish and paint industry to substitute volatile solvents from petroleum for seed oils that, once reacted with oxygen, form a solid coating similar to that produced by paints with solvents.

However, in the asphalt industry, the application is limited by the fact that seed oils are insoluble in asphaltic bitumen.

Seed oils are insoluble in asphaltic bitumen because they are formed by triglycerides of fatty acids. On the contrary, fatty acids are very soluble in bitumen as proved by the fact that Tall Oil has been used as an additive of asphaltic bitumen for a long time.

Esters of seed oils and alcohols with a small number of carbon atoms are also very soluble in bitumen. The combination of solubility in bitumen of esters of seed oils and their ability to cross-link in the presence of oxygen has been used by the bituminous based binder manufacturing industry.

In French patent 2768150, a process is disclosed by which methyl esters of seed oils are used as fluidizing agents in the presence of metallic catalysts. According to the authors, by the action of oxygen, the methyl esters cross-link and harden the bitumen, preventing the evaporation of the fluidizing agent.

This system is limited because the final hardness is achieved by a combination of the bitumen hardness before a solvent has been added to it and the hardness resulting from the cross linking of the solvent. It is obvious that it is necessary for the system to have a high amount of solvent for the cross linking of the solvent to have a suitable extension. Such amount leads to the final hardness of the bitumen mixed with cross-linked solvent not being high enough for the pavement to have a suitable resistance in spite of the bitumen having a hardness of less than 10 (1/10) mm before it is mixed with the solvent.

A way of avoiding this limitation has been discovered that consists of using penetrating bitumen to which unsaturated fatty acids are added in a sufficiently high amount to cause cross-linking. In addition to the property of cross-linking in the presence of oxygen, fatty acids have a high solubility in asphaltic bitumen and a lower fluidizing ability.

### Description of the Invention

The aim of the present invention is to solve the drawbacks previously set forth and to provide a bituminous binder with a suitable hardness. According to a first essential aspect of the invention, the bituminous binder applicable in road construction is characterized in that it comprises:
a.- between 50 and 94.4999% of penetrating asphaltic bitumen;
b.- between 0.5 and 49.9999% of at least one unsaturated fatty acid; and
c.- between 0.0001 and 1% of at least one fatty acid cross-linking catalyst.

Optionally, the bituminous binder can also comprise saturated fatty acids. The iodine index constitutes a measurement of the unsaturated fatty acid content. The higher this is, the greater is the unsaturation of the fatty acids. According to a preferred embodiment of the present invention, the fatty acids have an iodine index of at least 50, preferably higher than 80, more preferably higher than 100.

Said fatty acids can preferably be of animal or vegetable origin. Those of animal origin can be selected from the group consisting of both distillated and raw fatty acids from tallow, of both marine and land animal origin, lard, butter or mixtures thereof.

Those of vegetable origin can be selected from the group consisting of fatty acids from the distillation of olive oil, corn oil, soybean oil, sunflower oil, peanut oil, cottonseed oil, palm oil, crude and refined Tall Oil, TOFA, colophony or mixtures thereof.

Said fatty acids preferably have a hydrocarbon chain greater than or equal to 12 carbon atoms, more preferably greater than 16 carbon atoms, preferably being in a percentage between 0.5 and 30%, more preferably between 0.5 and 10%. Optionally, the penetrating asphaltic bitumen is selected from a group formed by bitumen from vacuum distillation units, deasphalting units, visbreaking units from petroleum refining operations or mixtures thereof.

According to a another preferred embodiment of the present invention, said penetrating asphaltic bitumen comprises a polymer selected from the group formed by SBS, SBR; EVA; polyethylene; EPDM; powder from tire grinding or mixtures thereof.

Preferably, the fatty acid cross-linking catalyst is at a concentration comprised between 0.0005 and 0.6%, and comprises metallic soaps of general formula:

(RCOO)ₓM

where:
R is an aliphatic or alicyclic hydrocarbon, preferably octoate, naphthenate or mixtures thereof; and
M is a metal with valence x, which is selected from the group consisting of cobalt, manganese, cerium, iron, vanadium, zirconium, lanthanum, neodymium, aluminium, bismuth, strontium, lead, barium, potassium, lithium, calcium, zinc or mixtures thereof.

According to another preferred embodiment of the present invention, the bituminous binder comprises an accelerant of the reaction of fatty acids with oxygen selected from the group consisting of 2,2'-bipyridyl, of 1,10-phenanthroline or mixtures thereof and preferably, it is at a concentration comprised between 0 and 1 %.

According to a second essential aspect, the preset invention relates to a procedure for asphaltic coating of surfaces characterized in that it comprises the steps of:
i.- mixing a bituminous ligand according to the present invention;
ii.- adding a fluidizing agent to the mixture obtained in step i.-; and
iii.- applying the mixture obtained in step ii.- on the surface which is to be paved.

According to a preferred embodiment, the present invention comprises an additional step iv.- consisting of adding grit on the surface which is to be paved.

Preferably, the fluidizing agent is selected from the group formed by a fatty acid ester obtained by the transesterification of a seed oil or mixtures thereof. Preferably, the transesterifying agent is an alcohol selected from the group formed by butanol, propanol, ethanol, methanol or a mixture thereof. Preferably, the application of step iii.-is carried out by means of a surfacing system.

Optionally, the process of the present invention is applied at a temperature comprised between 10 and 200°C, preferably between 25 and 180°C and more preferably between 25 and 130°C.

According to a third essential aspect, the present invention relates to using the bituminous binder for manufacturing and/or conditioning asphalts, preferably for manufacturing bituminous mixtures for road paving, by means of mixing the bituminous binder with an aggregate. According to a preferred embodiment, the present invention relates to using a bituminous binder according to the present invention for surface treatment by means of gritting and applying tack or priming coat auxiliaries.

The present invention is illustrated below by means of the following examples of preferred embodiments, which by no means should be considered limiting.

### Example 1

The following mixture is prepared using a laboratory stirrer:
91.9% asphaltic bitumen with penetration 60/70
8% distilled fatty acid from soy bean
0.1 % cobalt octoate

The mixture is cured at variable temperature for 24 hours, in thin film, using the containers and oven described in Spanish standard NLT - 185/99.

As can be seen in the following table, there is a considerable hardening and an increase in the softening point.

| Penetration (1/10 mm) | | | | Ring and Ball Temperature (°C) | | | |
|---|---|---|---|---|---|---|---|
| Original | Cured at 100°C | Cured at 130°C | Cured at 160°C | Original | Cured at 100°C | Cured at 130°C | Cured at 160°C |
| 504 | 403 | 184 | 34 | 30.8 | 34.6 | 40.7 | 40.4 |

### Example 2. Using a drying auxiliary

The following mixture was prepared using a laboratory stirrer:
91.89% asphaltic bitumen with penetration 60/70
8% distilled fatty acid from soy bean
0.1 % cobalt naphthenate
0.01% potassium naphthenate

The mixture is cured at variable temperature during 24 hours, in thin film, using the containers and oven described in Spanish standard NLT-185/99.

As can be seen in the following table, there is a considerable hardening and an increase in the softening point.

| Penetration (1/10 mm) | | | | Ring and Ball Temperature (°C) | | | |
|---|---|---|---|---|---|---|---|
| Original | Cured at 100°C | Cured at 130°C | Cured at 160°C | Original | Cured at 100°C | Cured at 130°C | Cured at 160°C |
| 504 | 306 | 185 | 27 | 30.8 | 35.0 | 41 | 34.7 |

### Example 3. Using a drying auxiliary and an accelerant

The following mixture was prepared using a laboratory stirrer:
91.89% asphaltic bitumen with penetration 60/70
8% distilled fatty acid from soy bean
0.1 % cobalt naphthenate
0.01% potassium naphthenate
0.0001% 1,10-phenanthroline

The mixture is cured at variable temperature during 24 hours, in thin film, using the containers and oven described in Spanish standard NLT-185/99.

As can be seen in the following table, there is a considerable hardening and an increase in the softening point.

| Penetration (1/10 mm) | | | | Ring and Ball Temperature (°C) | | | |
|---|---|---|---|---|---|---|---|
| Original | Cured at 100°C | Cured at 130°C | Cured at 160°C | Original | Cured at 100°C | Cured at 130°C | Cured at 160°C |
| 504 | 180 | 85 | 27 | 30.8 | 37.0 | 42 | 39.1 |

### Example 4. Influence of the base bitumen penetration

This example shows how bituminous binders according to this invention can be obtained from hard bitumen, useful for hot mixtures at relatively low temperatures.

The following mixture was prepared using a laboratory stirrer:
91.8% asphaltic bitumen with penetration 13/22
8% crude Tall Oil
0.2% cobalt naphthenate

The mixture is cured at variable temperature during 24 hours, in thin film, using the containers and oven described in Spanish standard NLT - 185/99.

| Penetration (1/10 mm) | | | | Ring and Ball Temperature (°C) | | | |
|---|---|---|---|---|---|---|---|
| Original | Cured at 100°C | Cured at 130°C | Cured at 160°C | Original | Cured at 100°C | Cured at 130°C | Cured at 160°C |
| 504 | 180 | 85 | 27 | 30.8 | 37.0 | 42 | 39.1 |

### Example 5. Application to a bituminous mixture for road paving

Using the binder from example 4, 3 test pieces of bituminous mixture were prepared with siliceous-calcareous aggregates. The granulometry used was the S12 type from the Specifications Form of the Spanish Ministry of Development. The percentage of bitumen in the mixture was 4.75%.

The bitumen/aggregates mixture and the test piece manufacturing were carried out at 130°C. The test pieces were subsequently kept in the oven at 130°C during 24 hours.

The Marshall results (average of three test pieces) were stability 15 kN, density 2.34 g/cc and deformation 4.75 mm. Those skilled in interpreting Marshall test results can observe that the results obtained correspond to those of a hot mixture manufactured with an asphaltic bitumen with penetration 60/70.

### Example 6. Application to gritting

The advantage of using a fluidized bitumen according to the present invention is illustrated by means of this example.

90% of the binder described in example 4 is mixed with 10% of an ethyl ester from rapeseed oil (LF1).

By way of comparison, a fluidized bitumen was prepared with 89.8% of asphaltic bitumen 60/70, 10% ethyl ester from rapeseed oil and 0.2% cobalt naphthenate (LF2).

A Vialit plate adhesion test according to Spanish standard NLT 313.87 was carried out with each of the two fluidized binders obtained. Nine plates were prepared for this on which 45 g of the previously described fluidized binder were extended. 100 siliceous-calcareous aggregate chippings of size 6/10 were extended on each plate.

The plates thus prepared were kept in the oven at 130°C and three of them were tested after an hour, three after 8 hours and the other three after 24 hours.

The average adhesion of the three plates prepared with binder LF1 (object of this invention) and tested after 1 hour was 94.2%, that of the three plates tested after 8 hours was 100% and that of the three plates tested after 24 hours was 100%.

The average adhesion of the three plates prepared with binder LF2 (comparative binder) and tested after 1 hour was 85.2%, that of the three plates tested after 8 hours was 93.3% and that of the three plates tested after 24 hours was 100%.

Those skilled in interpreting these results will note the advantage of using the binder object of this invention with respect to the comparative binder.

## Claims

1. A bituminous binder applicable in road construction, **characterized in that** it comprises:
a.- between 50 and 94.4999% of penetrating asphaltic bitumen;
b.- between 0.5 and 49.9999% of at least one unsaturated fatty acid; and
c.- between 0.0001 and 1% of at least one fatty acid cross-linking catalyst.

2. A bituminous binder according to claim 1, **characterized in that** it also comprises saturated fatty acids.

3. A bituminous binder according to any of the previous claims, **characterized in that** said fatty acids have an iodine index of at least 50, preferably higher than 80, more preferably higher than 100.

4. A bituminous binder applicable in road construction according to claims 1 to 3, **characterized in that** said fatty acids are of animal origin selected from the group consisting of distillated and raw fatty acids from tallow, of both marine and land animal origin, lard, butter or mixtures thereof.

5. A bituminous binder applicable in road construction according to claims 1-3, **characterized in that** the fatty acids are of vegetable origin selected from the group consisting of fatty acids from the distillation of olive oil, corn oil, soybean oil, sunflower oil, peanut oil, cottonseed oil, palm oil, crude and refined Tall Oil, TOFA, colophony or mixtures thereof.

6. A bituminous binder applicable in road construction according to any of the previous claims, **characterized in that** said fatty acids have a hydrocarbon chain greater than or equal to 12 carbon atoms, preferably greater than 16 carbon atoms.

7. A bituminous binder applicable in road construction according to any of the previous claims, **characterized in that** the fatty acids are in a percentage between 0.5 and 30%, preferably between 0.5 and 10%.

8. A bituminous binder applicable in road construction according to any of the previous claims, **characterized in that** said penetrating asphaltic bitumen is selected from the group formed by bitumen from vacuum distillation units, deasphalting units, visbreaking units from petroleum refining operations or mixtures thereof.

9. A bituminous binder applicable in road construction according to any of the previous claims, **characterized in that** said penetrating asphaltic bitumen comprises a polymer selected from the group formed by SBS, SBR; EVA; polyethylene; EPDM; powder from tire grinding or mixtures thereof.

10. A bituminous binder applicable in road construction according to any of the previous claims, **characterized in that** the fatty acid cross-linking catalyst comprises metallic soaps of general formula:
(RCOO)ₓM
where
R is an aliphatic or alicyclic hydrocarbon, preferably octoate, naphthenate or mixtures thereof; and
M is a metal with valence x, which is selected from the group consisting of cobalt, manganese, cerium, iron, vanadium, zirconium, lanthanum, neodymium, aluminium, bismuth, strontium, lead, barium, potassium, lithium, calcium, zinc or mixtures thereof.

11. A bituminous binder applicable in road construction according to any of the previous claims, **characterized in that** said catalyst is at a concentration comprised between 0.0005 and 0.6%.

12. A bituminous binder applicable in road construction according to any of the previous claims, **characterized in that** an accelerant of the reaction between fatty acids and oxygen can be added.

13. A bituminous binder applicable in road construction according to claim 12, **characterized in that** said accelerant is selected from the group consisting of 2,2'-bipyridyl, 1,10-phenanthroline or mixtures thereof.

14. A bituminous binder applicable in road construction according to claims 12 and 13, **characterized in that** the accelerant is at a concentration comprised between 0 and 1 %.

15. A process for the asphaltic coating of surfaces, **characterized in that** it comprises the steps of:
i.- mixing a bituminous binder according to any of claims 1 to 14;
ii.- adding a fluidizing agent to the mixture obtained in step i.-; and
iii.- applying the mixture obtained in step ii.- on the surface which is to be paved.

16. A process according to claim 15, **characterized in that** it comprises an additional step iv.- consisting of adding grit on the surface which is to be paved.

17. A process according to any of claims 15 and 16, **characterized in that** the fluidizing agent is obtained by the transesterification of an unsaturated fatty acid with a transesterifying agent.

18. A process according to any of claims 15-17, **characterized in that** said transesterifying agent is an alcohol selected from the group formed by butanol, propanol, ethanol, methanol or a mixture thereof.

19. A process according to any of claims 15-18, **characterized in that** said fluidizing agent is selected from the group formed by a fatty acid ester obtained by transesterification of a seed oil or mixtures thereof.

20. A process according to any of claims 15-19, **characterized in that** the application of step iii.- is carried out by a surfacing system.

21. A process according to any of claims 15-20, **characterized in that** a temperature comprised between 10 and 200°C is applied, preferably between 25 and 180°C and more preferably between 25 and 130°C.

22. Use of a bituminous binder according to any of claims 1-14 for manufacturing and/or conditioning asphalts.

23. Use according to claim 22 for surface treatment by means of gritting and applying tack or priming coat auxiliaries.

24. Use according to claim 22 for manufacturing asphaltic mixtures for road paving by mixing the bituminous binder with an aggregate.
